Europäisches Patentamt

European Patent Office

Office européen des brevets

(19)

(11) Publication number : **0 165 680**
**B1**

# (12) EUROPEAN PATENT SPECIFICATION

(45) Date of publication of patent specification :
06.07.88

(21) Application number : 85303036.9

(22) Date of filing : 29.04.85

(51) Int. Cl.⁴ : **B 32 B   3/30**

(54) A method of producing a strip with an embossed finish.

(30) Priority : 15.05.84 GB 8412332

(43) Date of publication of application :
27.12.85 Bulletin 85/52

(45) Publication of the grant of the patent :
06.07.88 Bulletin 88/27

(84) Designated contracting states :
BE DE FR GB IT NL

(56) References cited :
DE-A- 3 117 604
DE-B- 1 446 695
DE-B- 2 639 190
GB-A- 1 176 838
GB-A- 1 221 134

(73) Proprietor : HUNTER DOUGLAS INDUSTRIES B.V.
Piekstraat 2
NL-3071 EL Rotterdam (NL)

(72) Inventor : Rocholl, Johan Peter
Haviksweg 19
Zwijndrecht (NL)

(74) Representative : Allen, William Guy Fairfax et al
J.A. KEMP & CO. 14 South Square Gray's Inn
London WC1R 5EU (GB)

EP 0 165 680 B1

Jouve, 18, rue St-Denis, 75001 Paris, France

## Description

The present invention relates to a method of producing a strip with an embossed finish.

Various proposals have been made for providing an embossed finish on a strip of material, for example, a metal strip. For example one can simply an embossing to the metal itself so that a design is impressed into one face of the metal strip and it appears on the other face in reverse form. The problem with such a method is that one cannot satisfactorily apply a delicate or low relief embossing to the strip. Another suggestion which has been made is to form a laminate of metal and a plastic, and to apply the embossing to the plastics material. The problem with this arrangement is that the plastic memory of the plastic material causes the embossing to disappear, at least in part, with the passage of time.

It is now proposed, according to the present invention, to provide a method of producing a metal strip with an embossed finish, having a given maximum embossing depth, said method comprising feeding the strip longitudinally through a heater, applying to one face of the thus heated strip a first face of a thermoplastic adhesive layer of a thickness greater than said given depth, the strip having been heated to a temperature sufficient to soften the thermoplastic adhesive a metal foil or metallized foil being already laminated to the other face of the adhesive layer or — alternatively — being applied to the adhesive layer at this stage, the heating of the strip being the only heating provided, and applying the embossing deformation to the foil from the face of the foil remote from the adhesive, so that the deformation is taken up completely within the thickness of the thermoplastic adhesive, without affecting the strip, and cooling the resulting product to harden the adhesive.

With such a method it is possible to produce an embossed finish which can be of a significant depth or can be relatively delicate and of low relief, and this design is retained substantially permanently. Furthermore, because the deformation takes place completely within the thickness of the thermoplastic adhesive, there is no deformation at all of the strip material itself. It is very often advantageous to have the embossed finish only on one face of the strip being treated for various aesthetic and practical reasons. This is fully possible with the method according to the present invention.

The method according to the present invention enables one to finish up with a metal appearance finish on the embossed surface of the strip material which itself may either be metal, such as aluminium strip, as for example, used in venetian blinds, or could itself be a plastics materials.

The foil and the adhesive may be supplied as a laminate, the adhesive face of laminate being applied to the strip.

The heating may, for example, be carried out while the strip is passing through a furnace used to cure paint which has previously been applied to the strip.

Instead of applying the foil and the adhesive as a laminate, the thermoplastic adhesive, the foil and the strip can be supplied separately and joined by pressing them together with a pressure means, one of which is formed by an embossing roll or plate.

The foil may be provided, on its face remote from the adhesive, with a transparent protective film, such as a polyester film. In fact the foil may be a metallized foil formed by a protective film having a metallized layer, the foil being applied with the metallized layer facing the adhesive.

The thickness of the thermoplastic adhesive is advantageously between 20 and 500 $\mu$m, and preferably between 30 and 200 $\mu$m. The embossing deformation will, of course, be less than the thickness of the adhesive and is preferably between 2 and 180 $\mu$m.

The embossing deformation may be carried out by means of a forming roll or plate, the temperature of which is significantly below the softening point of the thermoplastic adhesive which had, of course, previously been heated to a temperature above its softening point prior to the application of the deforming roll or plate there against.

The thickness of the metallized foil or metal foil is desirably between 10 and 40 $\mu$m.

The invention also provides a strip with an embossed finish produced by the method of the invention and a product including one or more such strips.

In order that the invention may more readily be understood, the following description is given, merely by way of example, reference being made to the accompanying drawings, in which :

Figure 1 is a schematic cross-section through a metal strip provided with an embossed finish by the method of the invention ;

Figure 2 is a schematic view of one embodiment of apparatus for carrying out the method of the invention ;

Figure 3 is a view similar to Figure 2 of a further form of apparatus.

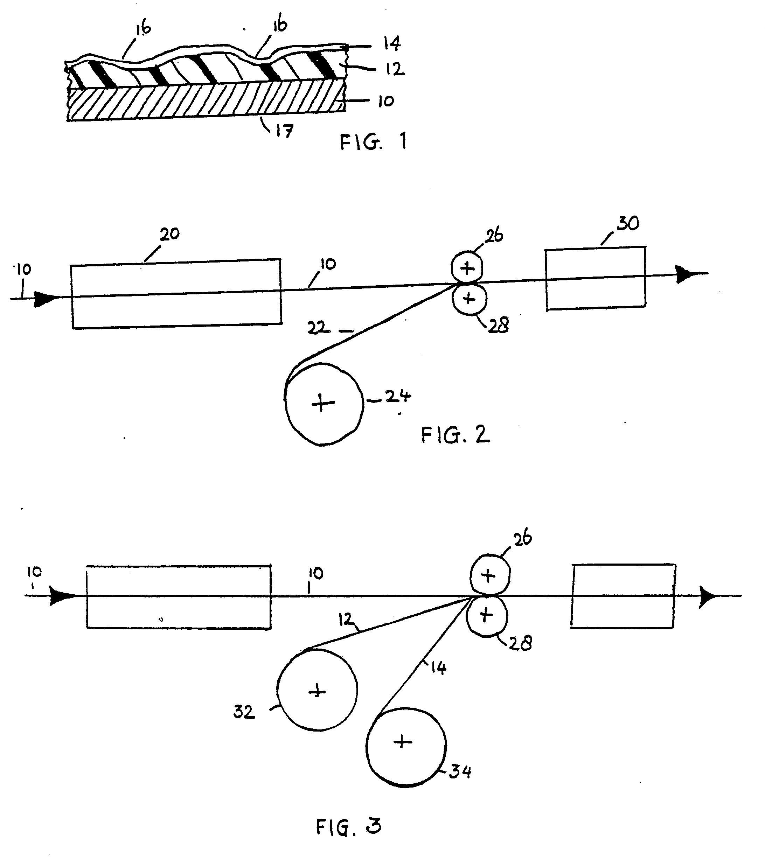

Referring first to Figure 1, there is illustrated therein a strip 10 of metal to which is applied a thermoplastic adhesive 12 having thereabove a metal foil 14. This foil is deformed from the face thereof remote from the adhesive 12 by a suitable deforming means to be described below and the deformations are indicated at 16.

It will be seen that the deformations 16 are of a depth which is less than the thickness of the adhesive 12 so that the deformations are taken up completely within the thickness of the thermoplastic adhesive, without affecting the strip material 10 therebelow. Thus the lower face 17 of the strip 10 is completely smooth and is not in any way affected by the deformations 16.

The strip 10 may be formed from aluminium or steel. The thermoplastic adhesive can be of any suitable type compatible with the strip and compatible with the foil 14, and can have a thickness between 20 and 5 000 μm and preferably of between 30 and 200 μm.

The foil 14 can be a pure metal foil, or can be a metal foil reinforced with a polyester film on its upper surface, as seen in figure 1, or can indeed be a metallized polyester film with the lower surface, that is the surface in contact with the adhesive, having been premetallized onto the film. In either event the film is preferably of a transparent nature so that the metal effect appears through the transparent film.

One method of producing the strip is indicated in Figure 2. The metal strip 10 is passed through an oven or furnace 20, which may, if desired, be the furnace used to cure paint which has previously been applied to the strip: A composite film 22 consisting of the metal foil 14 and a thermoplastic film 12 is unwound from a reel 24 thereof and fed between a pair of rolls 26, 28. The roll 26 is a heated roll which may be heated to a temperature of say, 100 to 200 °C and the roll 28, which is applied against the metal foil, is a cooled embossing roll 28 which serves both to impart the embossing deformation to the metal foil, so that it is taken up fully in the thermoplastic adhesive as described above, and also to laminate, together with the roll 26, the composite film to the strip 10. The laminated structure may then pass through a cooling zone 30 so that it is cooled to room temperature and the thermoplastic adhesive is hardened to maintain the embossed deformation of the foil.

Figure 3 indicates a similar arrangement and like parts have been indicated by like reference numerals. However, instead of the composite film 22 a thermoplastic film 12 is unwound from a roll 32 and a metal foil 14 is unwound from a roll 34 before passing between the rolls 26, 28.

It is also contemplated that the thermoplastic layer could be coated onto the strip 10 in a separate operation, that is to say before the metal foil is brought into contact therewith at the rolls 26, 28.

It is also contemplated that the metal foil could be in the form of metallizing on a backing film, for example a polyester film which is preferably transparent. Similarly, even the metal foil is a foil in its own right, a protective reinforcing film, again for example of polyester and transparent, can be applied to the face of the metal foil remote from the adhesive and secured thereto by a further adhesive material.

## Claims

1. A method of producing a metal strip with an embossed finish, having a given maximum embossing depth, said method comprising feeding the strip longitudinally through a heater, applying to one face of the thus heated strip a first face of a thermoplastic adhesive layer of a thickness greater than said given depth, the strip having been heated to a temperature sufficient to soften the thermoplastic adhesive, a metal foil or a metallized foil, being already laminated to the other face of the adhesive layer or — alternatively — being applied to the adhesive layer at this stage, the heating of the strip being the only heating provided, and applying the embossing deformation to the foil from the face of the foil remote from the adhesive, so that the deformation is taken up completely within the thickness of the thermoplastic adhesive, without affecting the strip, and cooling the resulting product to harden the adhesive.

2. A method according to claim 1, wherein the adhesive layer is applied to the strip in liquid form, e. g. as a suspension or dispersion.

3. A method according to claim 1, wherein the foil and the adhesive are supplied as a laminate, the adhesive face of the laminate being applied to the strip.

4. A method according to claim 1, wherein the thermo-plastic adhesive, the foil and the strip are joined by pressing them together between pressure means, one of which is formed by an embossing roll or plate.

5. A method according to any preceding claim, wherein the metal strip is heated while it is passing through a furnace used to cure paint which has previously been applied to the strip.

6. A method according to any preceding claim, wherein the foil is provided, on its face remote from the adhesive, with a transparent protective film.

7. A method according to claim 6, wherein the film is a polyester film.

8. A method according to any one of claims 1 to 5, wherein the foil is a metallized foil formed by a protective film having a metallized layer, the foil being applied with the metallized layer facing the adhesive.

9. A method according to any preceding claim, wherein the thickness of the thermoplastic adhesive layer is between 20 and 500 μm.

10. A method according to claim 9, wherein the thermoplastic adhesive layer has a thickness between 30 and 200 μm.

11. A method according to claim 9 or 10, wherein the embossing deformation has a depth of between 2 and 180 μm.

12. A method according to any preceding claim, wherein the strip is heated to a temperature of between 100 and 200 °C.

13. A method according to any preceding claim, wherein the embossing deformation is carried out by a deforming roll or plate, the temperature of which is below the softening point of the thermoplastic adhesive.

14. A method according to any preceding claim, wherein the thickness of the metal of the metallized foil or metal foil is between 10 and 40 μm.

**Patentansprüche**

1. Ein Verfahren zur Herstellung eines Metallbandes mit geprägter Oberfläche und einer bestimmten max. Prägetiefe, welches folgende Schritte einschließt: Zuführung des Bandes in Längsrichtung durch eine Heizvorrichtung, Aufbringung einer ersten Seite einer thermoplastischen Klebschicht auf eine Seite des so erwärmten Bandes in einer Dicke, die größer ist als die genannte bestimmte Tiefe, wobei das Band zuvor auf eine Temperatur erwärmt wurde, die ausreicht, um den thermoplastischen Klebstoff zu erweichen, und wobei eine Metallfolie bzw. metallisierte Folie bereits auf der anderen Seite der Klebschicht aufgepreßt ist oder aber zu diesem Zeitpunkt auf die Klebschicht aufgebracht wird, während die Erwärmung des Bandes der einzige Erwärmungsvorgang ist, sowie Anwendung der Prägerverformung auf die Folie von der vom Klebstoff abgewandten Seite der Folie her, so daß die Verformung im Rahmen der Dicke des thermoplastischen Klebstoffes voll aufgenommen wird, ohne das Band zu beeinträchtigen, sowie Abkühlung des daraus resultierenden Erzeugnisses zur Aushärtung des Klebstoffes.

2. Ein Verfahren gemäß Anspruch 1, wobei die Klebschicht in flüssiger Form, z. B. als Suspension oder Dispersion, auf das Band aufgebracht wird.

3. Ein Verfahren gemäß Anspruch 1, wobei die Folie und der Klebstoff als Schichtstoff zugeführt werden und die klebfähige Seite des Schichtstoffs auf das Band aufgebracht wird.

4. Ein Verfahren gemäß Anspruch 1, wobei der thermoplastische Klebstoff, die Folie und das Band miteinander verbunden werden, indem man sie mittels Druckvorrichtungen, von denen eine aus einer Prägewalze oder -platte besteht, zusammendrückt.

5. Ein Verfahren gemäß einem der vorangegangenen Ansprüche, wobei das Metallband erwärmt wird, während es einen Ofen durchläuft, der benutzt wird, um die zuvor auf das Band aufgebrachte Farbe auszuhärten.

6. Ein Verfahren gemäß einem der vorangegangenen Ansprüche, worin die Folie auf der vom Klebstoff abgewandten Seite mit einem transparenten Schutzfilm versehen ist.

7. Ein Verfahren gemäß Anspruch 6, wobei der Film ein Polyesterfilm ist.

8. Ein Verfahren gemäß einem der Ansprüche 1 bis 5, wobei die Folie eine metallisierte Folie ist, die aus einem Schutzfilm mit Metallschicht besteht, und die Folie mit der Metallschicht zum Klebstoff hin aufgebracht wird.

9. Ein Verfahren gemäß einem der vorangegangenen Ansprüche, wobei die Dicke der Thermoplastischen Klebschicht zwischen 20 und 500 $\mu$m beträgt.

10. Ein Verfahren gemäß Anspruch 9, wobei die thermoplastische Klebschicht eine Dicke zwischen 30 und 200 $\mu$m hat.

11. Ein Verfahren gemäß Anspruch 9 oder 10, wobei die Prägeverformung eine Tiefe zwischen 2 und 180 $\mu$m hat.

12. Ein Verfahren gemäß einem der vorangegangenen Ansprüche, wobei das Band auf eine Temperatur zwischen 100 und 200 °C erwärmt wird.

13. Ein Verfahren gemäß einem der vorangegangenen Ansprüche, wobei die Prägeverformung durch eine Verformungswalze oder -platte bewirkt wird, deren Temperatur unter dem Erweichungspunkt des thermoplastischen Klebstoffes liegt.

14. Ein Verfahren gemäß einem der vorangegangenen Ansprüche, wobei die Dicke des Metalls der metallisierten Folie oder der Metallfolie zwischen 10 und 40 $\mu$m liegt.

## Revendications

1. Procédé pour fabriquer une bande métallique avec une surface estampée, présentant une profondeur d'estampage maximum donnée, ce procédé comprenant l'introduction de la bande dans le sens longitudinal d'un élément chauffant, l'application à une face de la bande ainsi chauffée de la première face d'une couche adhésive thermoplastique ayant une épaisseur supérieure à la profondeur donnée, la bande ayant été chauffée à une températue suffisante pour ramollir l'adhésif thermoplastique, un clinquant métallique ou un clinquant métallisé étant déjà laminé sur l'autre face de la couche adhésive, ou — en variante — étant appliqué à la couche adhésive à ce stade, le chauffage de la bande étant le seul chauffage fourni, et l'application de la déformation d'estampage au clinquant à partir de la face du clinquant éloignée de l'adhésif, de sorte que la déformation est absorbée complètement dans l'épaisseur de l'adhésif thermoplastique, sans affecter la bande, et le refroidissement du produit résultant de manière à durcir l'adhésif.

2. Procédé selon la revendication 1, dans lequel la couche d'adhésif est appliquée à la bande sous forme liquide, par exemple sous forme de suspension ou de dispersion.

3. Procédé selon la revendication 1, dans lequel le clinquant et l'adhésif sont fournis sous forme d'un stratifié, la face adhésive du stratifié étant appliquée à la bande.

4. Procédé selon la revendication 1, dans lequel l'adhésif thermoplastique, le clinquant et la bande sont réunis en les comprimant ensemble entre des moyens de compression, dont l'un est constitué d'un rouleau ou d'une plaque d'estampage.

5. Procédé selon l'une quelconque des revendications précédentes, dans lequel la bande métallique est chauffée alors qu'elle traverse un four utilisé pour durcir la peinture qui a été antérieurement appliquée à la bande.

6. Procédé selon l'une quelconque des revendications précédentes, dans lequel on applique au clinquant, sur sa face éloignée de l'adhésif, une pellicule transparente de protection.

7. Procédé selon la revendication 6, dans lequel la pellicule est une pellicule de polyester.

8. Procédé selon l'une quelconque des revendications 1 à 5, dans lequel le clinquant est un clinquant métallique comprenant une pellicule de protection ayant une couche métallisée, le clinquant comportant la couche métallisée en regard de l'adhésif.

9. Procédé selon l'une quelconque des revendications précédentes, dans lequel l'épaisseur de la couche d'adhésif thermoplastique est comprise entre 20 et 500 μm.

10. Procédé selon la revendication 9, dans lequel la couche d'adhésif thermoplastique a une épaisseur comprise entre 30 et 200 μm.

11. Procédé selon la revendication 9 ou la revendication 10, dans lequel la déformation par estampage a une profondeur comprise entre 2 et 180 μm.

12. Procédé selon l'une quelconque des revendications précédentes, dans lequel la bande est chauffée à une température comprise entre 100 et 200 °C.

13. Procédé selon l'une quelconque des revendications précédentes, dans lequel la déformation par estampage est effectuée par un rouleau ou une plaque de déformation dont la température est inférieure au point de ramollissement de l'adhésif thermoplastique.

14. Procédé selon l'une quelconque des revendications précédentes, dans lequel l'épaisseur du métal du clinquant métallisé ou du clinquant métallique est comprise entre 10 et 40 μm.

FIG. 1

FIG. 2

FIG. 3

1